# EUROPÄISCHE PATENTSCHRIFT

(11) **EP 0 437 200 B1**
(45) Veröffentlichungstag und Bekanntmachung des Hinweises auf die Patenterteilung: **07.09.1994**
(21) Anmeldenummer: 91100052.9
(22) Anmeldetag: 02.01.1991
(51) Int. Cl.: B65C 1/04, B65B 19/02

(54) **Vorrichtung zum Anbringen von Etiketten oder dergleichen an Packungen**
Device for applying labels or similar on packages
Dispositif pour la pose d'étiquettes et analogues sur des paquets

(30) Priorität: 12.01.1990 DE 4000685
(43) Veröffentlichungstag der Anmeldung: 17.07.1991
(73) Patentinhaber: Focke & Co. (GmbH & Co.), 27283 Verden (DE)
(72) Erfinder: Focke, Heinz, W-2810 Verden (DE); Oertel, Wolfgang, W-2810 Verden (DE); Philipowsky, Fred, W-1000 Berlin 42 (DE)
(74) Vertreter: Bolte, Erich, Dipl.-Ing.

(56) Entgegenhaltungen:
- FR-A- 2 359 032
- FR-A- 2 409 914
- GB-A- 2 189 429
- US-A- 4 620 891

## Beschreibung

Die Erfindung betrifft eine Vorrichtung zum Anbringen von streifenförmigen Zuschnitten, nähmlich Banderolen, an einer Stirnflächen an einer quaderförmigen Packung, wobei die Banderole in einer Ebene quer zur Vorschubrichtung der mit der Stirnfläche in die Vorschubrichtung weisenden Packungen vor einem Mundstück bereit gehalten und beim Durchschieben der Packungen durch das Mundstück U-förmig um die Stirnfläche sowie an angrenzende Packungsflächen gefaltet wird, und wobei das Mundstück eine Eintrittsöffnung eines mindestens eine Packung aufnehmenden Packungsrohres ist.

Eine solche Vorrichtung ist bekannt aus der US-A 4 620 891. Bei dieser intermitierend arbeitenden Vorrichtung liegt die Banderole direkt an den Eintrittsöffnungen der Taschen eines Revolvers. Während eines Stillstandsphase werden die Packungen von einem Trockenrevolver an den Revolver übergeben, wobei die Banderole U-förmig um die in Vorschubrichtung weisende Stirnfläche der Packung gefaltet wird. Durch den taktweisen Antrieb ist die Leistungsfähigkeit dieser Vorrichtung begrenzt.

Der Erfindung liegt die Aufgabe zu Grunde, eine Verpackungsmaschine bzw. ein Aggregat derselben vorzuschlagen, welches eine zuverlässige Anbringung von Banderolen oder ähnlichen klebenden Streifen an der Verpackung bei hoher Leistungsfähigkeit und ohne Störung des Verpackungsablaufs ermöglicht.

Zur Lösung dieser Aufgabe ist die erfindungsgemäße Vorrichtung gekennzeichnet durch folgende Merkmale :
a) die Packungsrohre und die Packungen sind durch einen Rohrförderer durch einen Packungsförderer in aufeinander ausgerichteter Relativstellung quer zur Vorschubrichtung der Packungen fortlaufend bewegbar,
b) die Banderolen sind durch Mitnehmer vor der U-förmigen Umfaltung mit Abstand vor dem Mundstück synchron mit diesem transportierbar,
c) die Banderolen sind durch die korrespondierend zu den Mundstücken bewegten Packungen infolge der Vorschubbewegung derselben bis zur Anlage am Mundstück bewegbar.

Erfindungsgemäß erfolgt die Übergabe der Banderole an die Verpackung während des kontinuierlichen Transports derselben. Die Packungsrohre werden quer zu ihrer Längserstreckung transportiert. Mit der gleichen Geschwindigkeit werden die Banderolen in einer Position vor dem Mundstück transportiert und ebenfalls mit gleicher Geschwindigkeit werden die Packungen transportiert unter gleichzeitiger Vorschubbewegung in Längsrichtung der Packungsrohre. Es findet demnach ein insgesamt kontinuierlicher Transport bei zunehmender Übergabe der Banderolen an die Verpackung statt.

Vor den Mündungen der fortlaufend transportierten Packungsrohre befindet sich ein in besonderer Weise ausgebildeter Banderolengeber in ortsfester Anordnung. Dieser positioniert die Banderolen in der exakten Relativstellung zur Übernahme durch die zugeordneten Packungen.

Weitere Merkmale der Erfindung beziehen sich auf die Ausbildung des Banderolengebers sowie der Packungsrohre.

Ein Ausführungsbeispiel der erfindungsgemäßen Vorrichtung wird nachfolgend anhand der Zeichnungen näher erläutert. Es zeigt:

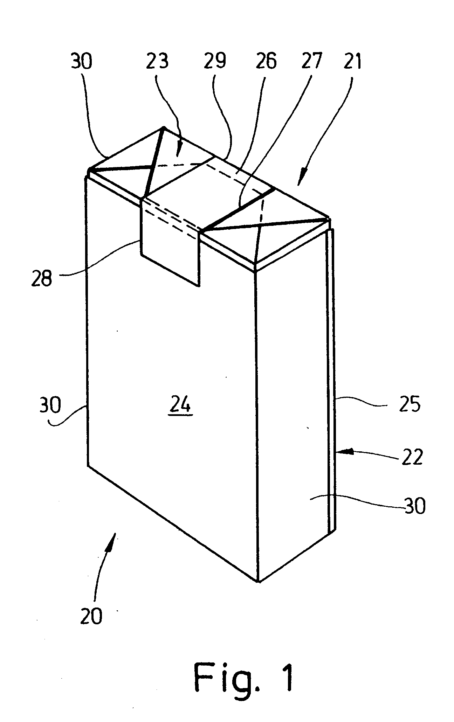

- Fig. 1: Eine Packung, nämlich eine Weichbecher-Packung für Zigaretten, in perspektivischer Darstellung,
- Fig. 2: eine Übersichtsdarstellung der Vorrichtung zur Behandlung von Packungen in Seitenansicht,
- Fig. 3: einen Ausschnitt der Vorrichtung gemäß Fig. 2 in vergrößertem Maßstab,
- Fig. 4: einen Ausschnitt der Vorrichtung im Grundriß (Draufsicht),
- Fig. 5: eine Darstellung analog zu Fig. 4 eines kleineren Ausschnitts bei nochmals vergrößertem Maßstab, mit einer Variante einer Einzelheit,
- Fig. 6: eine Einzelheit der Vorrichtung gemäß Fig. 4 für die Zuführung von Zuschnitten (Banderolen) zu den Packungen in Frontansicht,

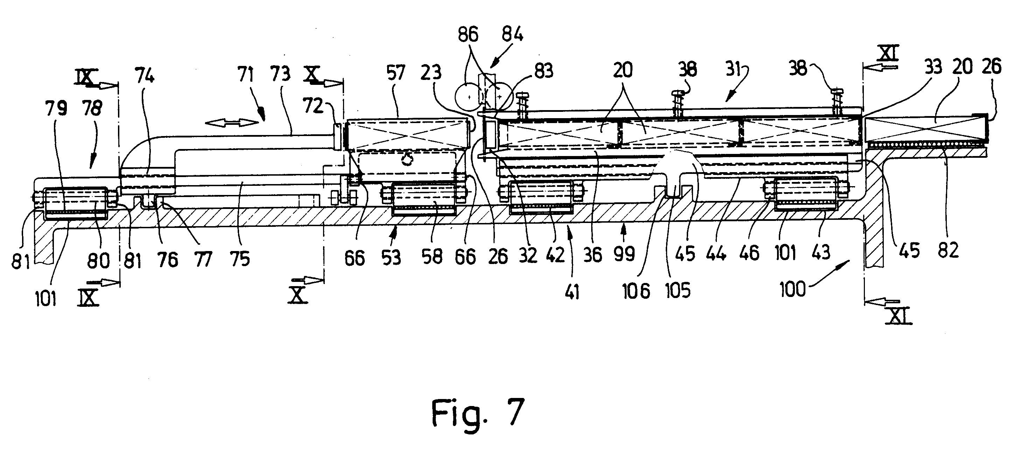

- Fig. 7: die Vorrichtung im Querschnitt (oberer Bereich von Förderern) - Ausführung gemäß Fig. 4,

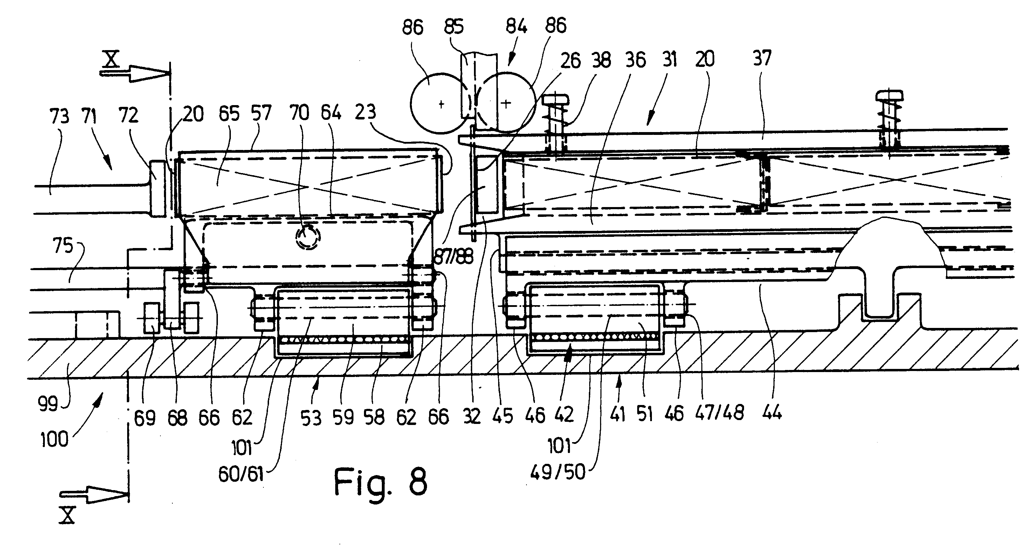

- Fig. 8: einen (mittleren) Ausschnitt der Darstellung gemäß Fig. 7, in vergrößertem Maßstab - Ausführung gemäß Fig. 4.
- Fig. 9: einen Querschnitt in der Ebene IX-IX der Fig. 7
- Fig. 10: einen Querschnitt in der Ebene X-X der Fig. 7,
- Fig. 11: einen Querschnitt in der Ebene XI-XI der Fig. 7 - Ausführung gemäß Fig. 4,

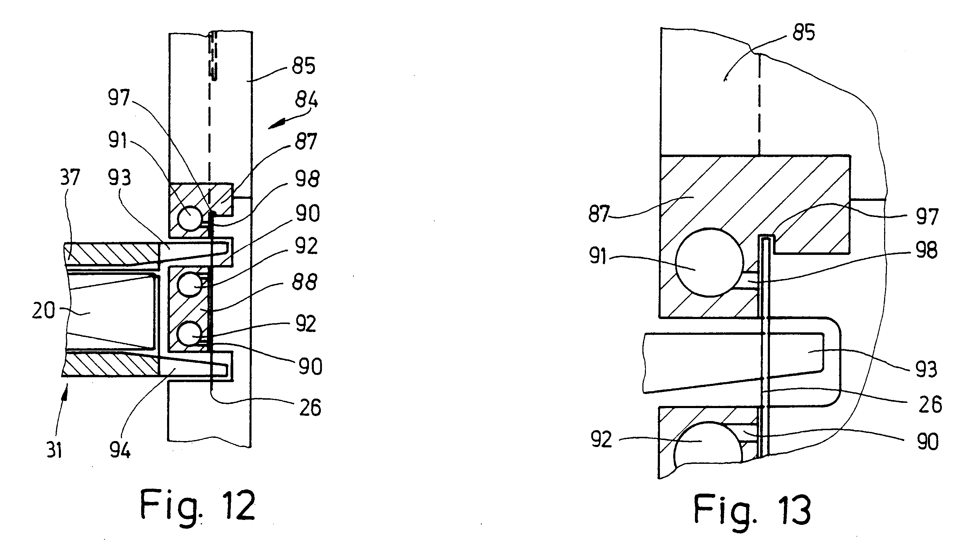

- Fig. 12: einen Vertikalschnitt XII-XII in Fig. 6, in vergrößertem Maßstab,
- Fig. 13: einen Ausschnitt der Fig. 12 in nochmals vergrößertem Maßstab,
- Fig. 14: eine Packung im Bereich ihrer Stirnfläche mit Einzelheiten der Ausführungsform gemäß Fig. 5, in vergrößertem Maßstab,
- Fig. 15: einen Querschnitt in der Ebene XV-XV der Fig. 14.

Die in den Zeichnungen als Ausführungsbeispiel dargestellte Vorrichtung ist besonderes geeignet für die Behandlung von quaderförmigen Packungen 20 des Typs Weichbecher für die Aufnahme von Zigaretten. Packungen 20 dieser Art bestehen aus einer Innenumhüllung - üblicherweise aus Stanniol - für eine Zigaretten-Gruppe. Die Innenumhüllung umgibt die Zigaretten-Gruppe allseitig und bildet so einen Zigaretten-Block 21. Eine Außenumhüllung besteht üblicherweise aus Papier und ist als Becher 22 ausgebildet, also oben offen. Der Zigarettenblock 21 ragt an der Oberseite geringfügig aus dem Becher 22 heraus.

Die so ausgebildete Packung weist unter anderem eine (obere) Stirnfläche 23 und daran anschließende, einander gegenüberliegende rechteckige Flächen, nämlich Vorderseite 24 und Rückseite 25 auf. Die Packung ist demnach insgesamt quaderförmig. Über die Stirnfläche 23 erstreckt sich ein durch Klebung befestigter Materialstreifen bzw. Zuschnitt, nämlich eine (Steuer-)Banderole 26. Diese liegt mit einem mittleren Bereich 27 an der Stirnfläche 23 an. Schenkel 28, 29 erstrecken sich im Bereich von Vorderseite 24 und Rückseite 25.

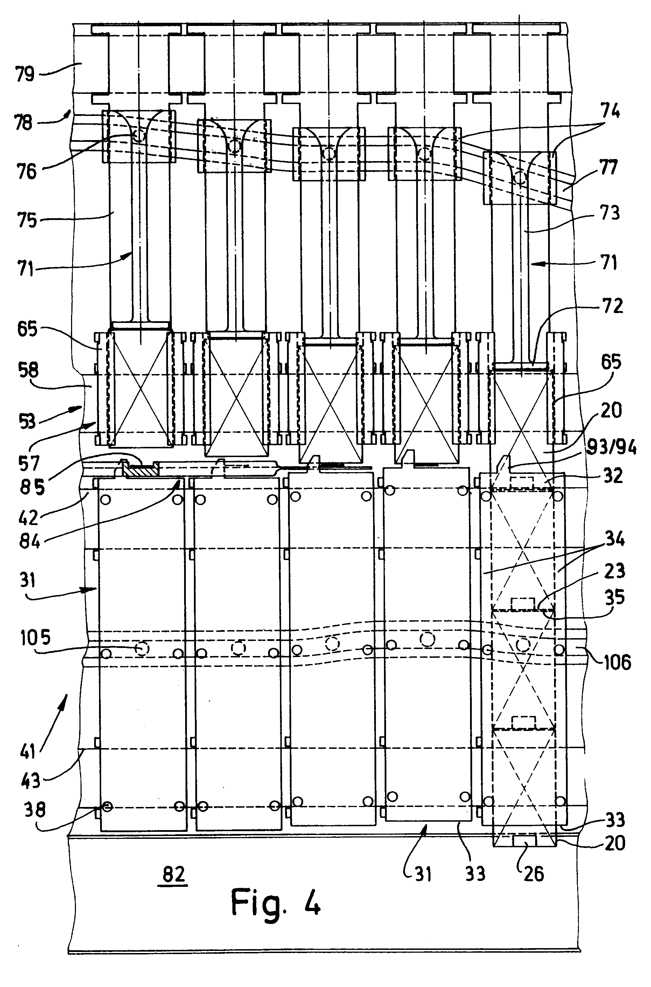

Die Packungen 20 werden nach der Fertigstellung in Halterungen bzw. Taschen eingeführt, die dem (Querschnitts-)Format der Packungen 20 entsprechen und diese demnach formschlüssig umgeben. Bei dem vorliegenden Ausführungsbeispiel ist die Vorrichtung mit langgestreckten, hülsenförmigen Halterungen für die Packungen 20 ausgerüstet, nämlich mit Packungsrohren 31, in denen jeweils eine größere Anzahl von Packungen 20 - bei dem dargestellten Ausführungsbeispiel (Fig. 4) jeweils drei Packungen 20 - Aufnahme finden. Die Packungsrohre 31 sind an beiden Enden offen, so daß die Packungen 20 an einem Ende, nämlich über eine Einschuböffnung 32, in das Packungsrohr 31 in Längsrichtung desselben einschiebbar sind. Auf der gegenüberliegenden Seite verläßt durch den Einschubvorgang gleichzeitig eine Packung 20 das Packungsrohr 31 über eine Austrittsöffnung 33. Die Seitenflächen 30 der Packung 20 liegen an Seitenwänden 34 des Packungsrohrs 31 an. Die Stirnflächen 23 stützen sich auf Bodenflächen 35 benachbarter Packungen 20 innerhalb des Packungsrohrs 31 ab.

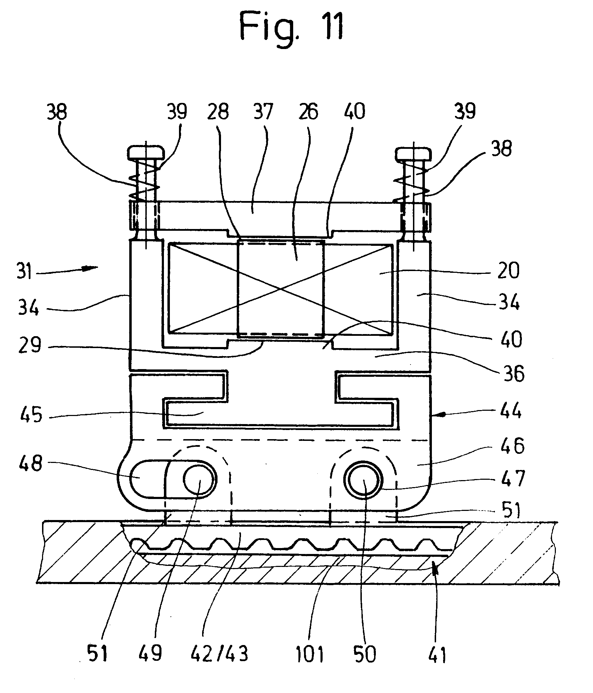

Eine vorteilhafte Ausführungsform für die Querschnittsgestaltung des Packungsrohrs 31 ergibt sich insbesondere aus Fig. 11. Danach bilden eine Bodenwand 36 mit den Seitenwänden 34 eine Einheit, nämlich ein im Querschnitt U-förmiges Profil. Eine Oberwand 37 ist als gesondertes Element ausgebildet und bewegbar an den Seitenwänden 34 befestigt. Diese ist zu diesem Zweck mit (aufrechten) Tragbolzen 38 versehen, auf denen die Oberwand 37 mit entsprechenden Bohrungen verschiebbar gelagert ist. Die Oberwand 37 wird mit elastischem Druck an die nach oben gerichtete Seite der Packungen 20 angedrückt, im vorliegenden Falle durch auf den Tragbolzen 38 angeordnete Druckfedern 39. Dadurch wird ein formgebender Druck auf die Packungen 20 im Packungsrohr 31 ausgeübt.

Bodenwand 36 und Oberwand 37 liegen nicht vollflächig an den Packungen 20 an, sondern mit stegartigen Erhöhungen 40. Diese erstrecken sich im mittleren Bereich des Packungsrohrs 31, mit einer Breite, die größer ist, als die der (ebenfalls mittigen) Banderole 26.

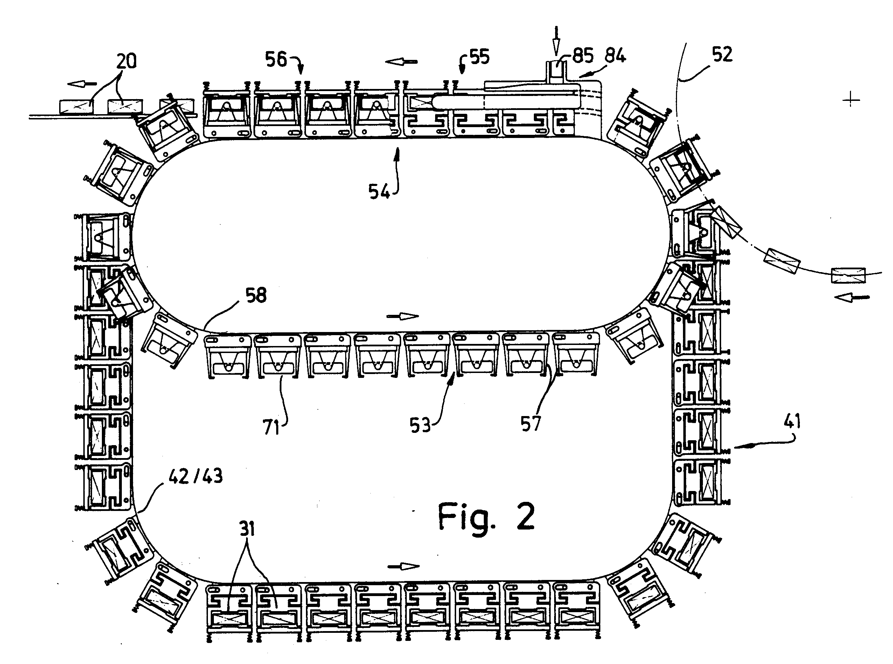

Eine Vielzahl von so ausgebildeten Packungsrohren 31 ist an einem Endlosförderer nebeneinander in paralleler Ausrichtung und mit geringem Abstand voneinander angeordnet. Der Endlosförderer ist im vorliegenden Falle ein Hüllförderer, der über mehrere, nämlich vier Umlenkrollen (nicht gezeigt) läuft. Die sich so ergebende Kontur eines Rohrförderers 41 mit quer zur Bewegungsrichtung weisenden Packungsrohren 31 ergibt sich aus Fig. 2.

Zur Bildung des Endlosförderers mit den Packungsrohren 31 sind diese an zwei im Abstand voneinander angeordneten Band- bzw. Riemenförderern angebracht, im vorliegenden Falle an Zahnriemen 42, 43.

Die Packungsrohre 31 sind mittelbar mit den Zahnriemen 42, 43 verbunden, und zwar über Tragschienen 44. Diese sind mit einem C-förmigen Profil ausgebildet, in welches eine schwalbenschwanzförmige Führungsschiene 45 an der Unterseite bzw. an der Bodenwand 36 des Packungsrohrs 31 formschlüssig und in Längsrichtung eintritt.

Die Tragschiene 44 ist zur Befestigung an dem Zahnriemen 42, 43 an ihrer Unterseite mit Verbindungslaschen 46 versehen. Diese weisen eine Bohrung 47 und mit Abstand hiervon ein Langloch 48 auf. Enden von mit dein Zahnriemen 42, 43 fest verbundenen Lagerbolzen 49, 50 treten in das Langloch 48 bzw. in die Bohrung 47 der Verbindungslaschen 46 ein. Die Lagerbolzen 49, 50 sind in wulstförmigen Ansätzen 51 an der zugekehrten bzw. oberen Seite des Zahnriemens 42, 43 durch Einbetten verankert.

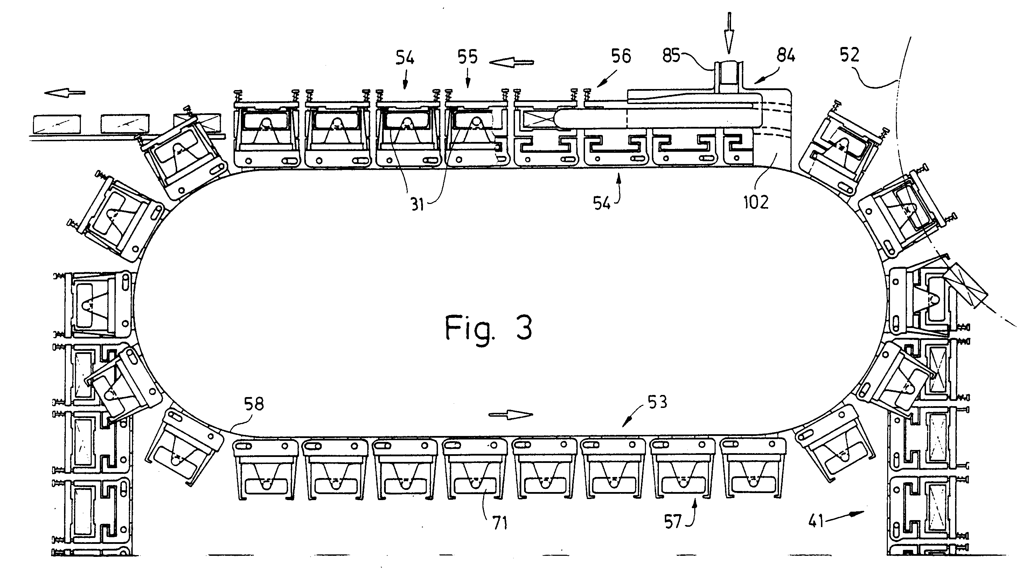

Durch die Lagerung eines der Lagerbolzen in einem Langloch 48 werden Relativbewegungen ermöglicht, die sich durch die Umlenkung der Zahnriemen 42, 43 im Bereich der (nicht dargestellten) Umlenkräder ergeben (z. B. Fig. 3).

Die fertig gefalteten Packungen 20 werden unmittelbar von einem Faltrevolver 52 (oder einem entsprechend ausgebildeten Zwischenförderer) zugeführt. Die Packungen 20 werden sodann von einem Packungsförderer 53 übernommen, der hier ebenfalls als Endlosförderer ausgebildet ist. Der Packungsförderer 53 verläuft in einer zum Rohrförderer 41 versetzten (aufrechten) Ebene. Ein oberer Fördertrum 54 des Packungsförderers 53 und ein hier gleichlanger Aufnahmetrum 55 verlaufen längs einer ausreichenden Förderstrecke synchron zueinander. Es handelt sich dabei um eine Übergabestrecke 56, in deren Bereich die Packungen 20 von dem Packungsförderer 53 an den Rohrförderer 41 übergeben werden. Diese Packungsübergabe von einem Förderer zum anderen erfolgt während fortlaufender kontinuierlicher Förderbewegung beider Förderer 41 und 53.

Der Packungsförderer 53 ist mit eng nebeneinanderliegenden Taschen 57, je zur Aufnahme einer Packung, bestückt. Die Taschen sind an einem Endlosförderer, nämlich einem Zahnriemen 58, angebracht. Dieser ist analog zu dem Ausführungsbeispiel der Fig. 11 mit zwei im Abstand voneinander angeordneten und an der Oberseite angeformten Ansätzen 59 versehen. Durch diese treten Lagerbolzen 60, 61 hindurch. Auf deren Enden wiederum sind Stege 62 abgestützt, und zwar auf dem Lagerbolzen 61 mit einem Langloch 63. Die Stege 62 wiederum sind Teil eines Taschenbodens 64, auf dem die Packung 20 aufliegt. Seitlich, nämlich im Bereich der schmalen Seitenflächen 30, ist die Packung 20 durch bewegbare Taschenwände 65 begrenzt. Diese sind mit entsprechenden Verlängerungen als zweiarmige, schwenkbare Hebel ausgebildet und jeweils um ein Zapflager 66 schwenkbar. Die oberen, freien Ränder der Taschenwände 65 sind mit quergerichteten Haltschenkeln 67 ausgebildet, so daß die Packungen 20 an der oberen bzw. äußeren Seite hakenförmig umfaßt werden.

Zur Aufnahme einer Packung 20 vom Faltrevolver 52 werden die Taschen 57 an der radial außenliegenden Seite geöffnet durch Auseinanderbewegen der Taschenwände 65. Zu diesem Zweck werden Betätigungsarme 68 im Bereich der Öffnung der Taschen 57 entsprechend beaufschlagt. An den Enden der Betätigungsarme 68 sind Stützrollen 69 angebracht. Diese laufen auf entsprechend ausgebildete Kurvenbahnen (nicht gezeigt) auf, so daß über die bogenförmig gestalteten Betätigungsarme 68 die Taschenwände 65 in die Öffnungsstellung bewegt werden. Diese sind durch eine die einander gegenüberliegenden Taschenwände 65 miteinander verbindende Zugfeder 70 ständig in Schließstellung belastet.

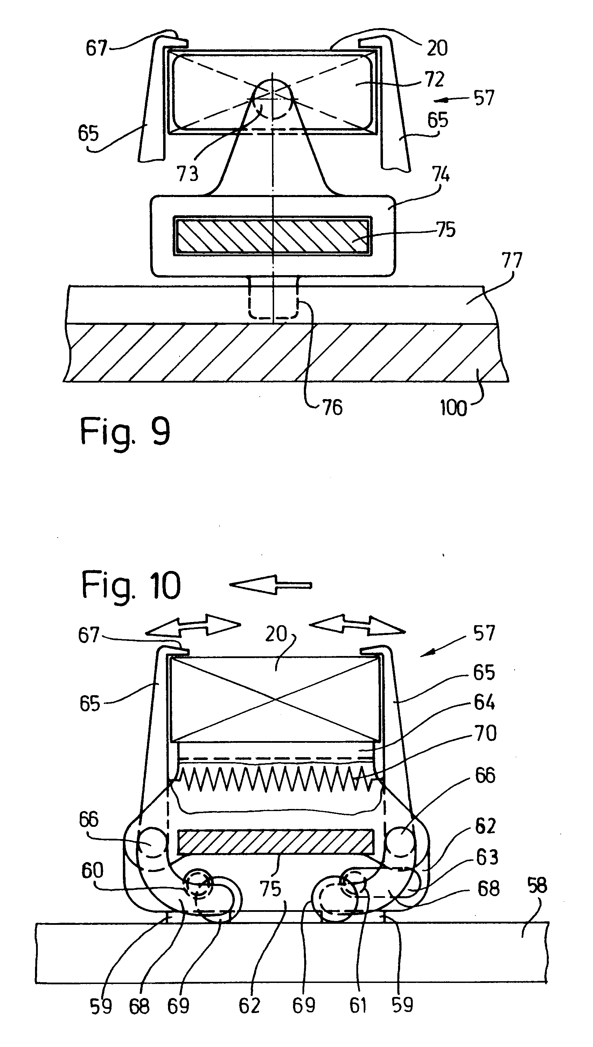

Die Taschenwände 65 sind in Schließstellung der Taschen 67 (Fig. 9, Fig. 10) so angeordnet, daß die Packungen 20 in Längsrichtung aus den an beiden Seiten offenen Taschen 57 ausgeschoben werden können. Hierfür ist jeder Tasche 57 ein Schieber 71 zugeordnet, der mit der zugeordneten Tasche 57 kontinuierlich umläuft. Der Schieber besteht aus einer Schieberplatte 72, die die Packung 20 an ihrer Bodenfläche 35 erfaßt. Eine langgestreckte Schieberstange 73 ist mit einem Gleitstück 74 verbunden, welches auf einer Traverse 75 verschiebbar gelagert ist. Diese erstreckt sich parallel zur Bewegungsbahn des Schiebers 71 bzw. horizontal.

Der Schieber 71 wird selbsttätig gesteuert, und zwar nach Maßgabe der Förderbewegung der Tasche 57 im Bereich der Übergabestrecke 56. Zu diesem Zweck ist an dem Gleitstück 74 ein Führungsstift 76 angebracht, der in eine feststehende Kurvennut 77 eingreift. Die Kurvennut 77 ist so gestaltet, daß bei fortlaufender Förderbewegung der Tasche 57 mit Schieber 71 dieser die Ausschubbewegung vollzieht, derart, daß die Packung 20 aus der Tasche 57 in ein unmittelbar gegenüberliegendes Packungsrohr 31 des Rohrförderers 41 gelangt. Danach kehrt der Schieber 71 in die Ausgangsstellung zurück.

Der Packungsförderer 53 ist mit einem gesonderten Schieberförderer 78 zu einer Fördereinheit verbunden. Mit Abstand vom Packungsförderer 53 bzw. dessen Zahnriemen 58 verläuft ein weiterer Endlosförderer, nämlich ein Zahnriemen 79. Dieser ist in ähnlicher Weise ausgebildet wie die bereits beschriebenen Ausführungsbeispiele von Zahnriemen. An der Oberseite sind in angeformten Ansätzen Lagerbolzen 80 gehalten. Auf deren Enden sind mit der Traverse 75 verbundene Stege 81 abgestützt und befestigt. Damit ist das freie, von dem Packungsförderer 53 abliegende Ende der Traversen 75 an dem Zahnriemen 79 befestigt. Das andere Ende ist mit der Tasche 57 und dadurch mit dem Zahriemen 58 des Packungsförderers 53 verbunden. Die so gebildete Einheit mit zwei Zahnriemen 58, 79 wird entsprechend kontinuierlich bewegt, synchron mit dem Rohrförderer 41.

Die Packungsrohre 31 sind so ausgebildet, daß auf die im Querschnitt rechteckigen Packungen 20 ein formgebender bzw. formstabilisierender Druck ausgeübt wird. In Längsrichtung finden mehrere Packungen 20 Aufnahme in einem Packungsrohr 31, im vorliegenden Falle drei Packungen 20. Diese liegen mit ihren Stirnflächen 23 und Bodenflächen 35 aneinander. Die Anordnung ist so getroffen, daß durch den Einschub einer Packung 20 durch den Schieber 71 in das Packungsrohr 31 gleichzeitig über die Austrittsöffnung 33 eine Packung 20 das Packungsrohr 31 verläßt. Diese ist dann mehrmals mit dem Rohrförderer 41 umgelaufen bei entsprechender Verweildauer im Packungsrohr 31, und zwar unter schrittweiser Vorschubbewegung zur Austrittsöffnung 33. Die fertig abgebundenen Packungen 20 gelangen auf einen Abförderer 82, der sich unmittelbar benachbart zur Austrittsöffnung 33 erstreckt.

Die Packungen 20 werden im Bereich der Stirnfläche 23 mit der Banderole 26 versehen. Die Banderole 26 wird durch eine Mundstücköffnung hindurchgeschoben, die so bemessen ist, daß die vor der Mundstücköffnung in einer Ebene quer zur Schubrichtung der Packungen bereitgehaltene Banderole 26 U-förmig um die Stirnfläche 23 und angrenzende Packungsflächen gefaltet wird. Bei dieser Ein- bzw. Durchschubbewegung liegt die Stirnfläche 23 einer Packung an der Bodenfläche 35 einer davorliegenden Packung 20 an. Zwischen diesen aneinanderliegenden Packungsflächen wird die Banderole 26 bei der Übernahme durch die Stirnfläche 23 einer Packung 20 und danach fixiert. Hierdurch wird die Gefahr unerwünschter Verschiebungen der Banderole 26 bis zum Abbinden von Leimstellen zum Anheften der Banderole 26 vermindert.

Bei dem vorliegenden Ausführungsbeispiel ist die Einschuböffnung 32 der Packungsrohre 31 die Mundstücköffnung, vor der die Banderole 26 zur Übernahme durch eine Packung 20 bereitgehalten wird. Die Packungsrohre 31 sind im Bereich der Einschuböffnung 32 an Bodenwand 36 und Oberwand 37 mit Abschrägungen 83 versehen.

Die Banderole 26 wird im Bereich der Übergabestrecke 56 in aufrechter Position vor der Einschuböffnung 32 bereitgehalten. Zu diesem Zweck ist zwischen dem Packungsförderer 53 und den Packungsrohren 31 ein feststehender Banderolengeber 84 angeordnet. Diesem werden die Banderolen 26 in aufrechter, der Positionierung an der Packung 20 entsprechender Relativstellung zugeführt, und zwar über einen Einführungsschacht 85. Die Banderolen 26 werden nacheinander durch Förderwalzen 86 in diesem Einführungsschacht 85 in Abwärtsrichtung transportiert bis zur Anlage an einem Halteorgan mit Saugbohrungen. Dieses besteht im vorliegenden Falle aus zwei langgestreckten Führungsstegen 87 und 88. An diesem liegen die Banderolen 26 mit der Außenseite, also mit der von der Packung 20 abgekehrten (leimfreien) Seite an. Saugbohrungen 89 im Bereich des oberen Führungsstegs 87 und zwei Reihen von Saugbohrungen 90 im Bereich des darunterliegenden Führungsstegs 88 halten die Banderolen 26 in der aufrechten Position. Die Saugbohrungen 89 und 90 sind über Saugkanäle 91, 92 an eine Unterdruckquelle angeschlossen.

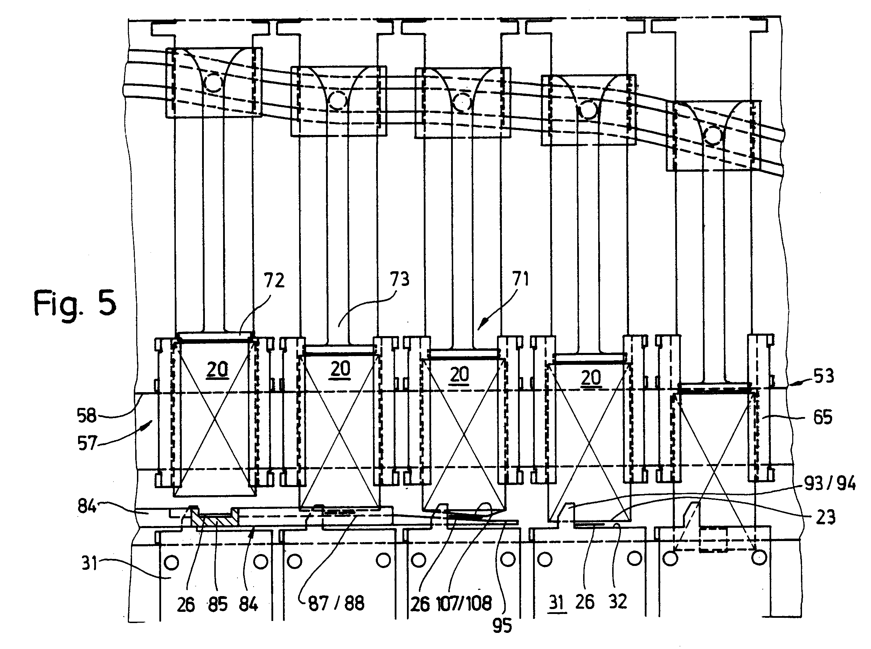

Die Banderolen 26 werden während des kontinuierlichen Transports der Packungen 20 an diese übergeben. Unmittelbar nach Förderung einer Banderole 26 in den Bereich der Führungsstege 87, 88 unterhalb des Einführungsschachts 85 wird die Banderole 26 durch Mitnehmer 93, 94 erfaßt, die im Abstand übereinander angeordnet sind und die Banderole in horizontaler Richtung transportieren, nämlich vor den Stirnflächen 23 zugeordneter Packungen 20. Die Mitnehmer 93, 94 sind so angeordnet, daß die Banderolen jeweils mittig auf die Stirnflächen 23 ausgerichtet sind. Die Mitnehmer 93, 94 sind zu diesem Zweck versetzt zur Längsmittelebene des Packungsrohrs 31 angebracht (Fig. 4 und Fig. 5).

Bei dem vorliegenden Ausführungsbeispiel sind die Mitnehmer 93, 94 an den Packungsrohren 31 angebracht, und zwar jeweils an der Bodenwand 36 und der Oberwand 37. Da die Packungsrohre 31 synchron mit den Packungen 20 und auf diese ausgerichtet gefördert werden, ergibt sich die exakte Relativstellung der Banderolen 26 in bezug auf die Packungen 20.

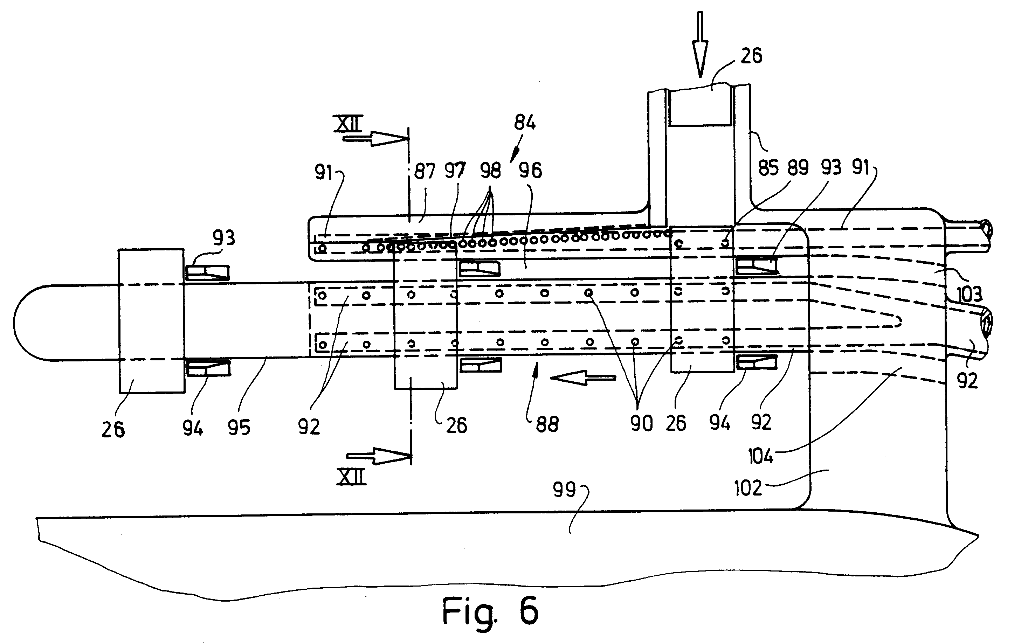

Während des Transports üben die Saugbohrungen 89, 90 durch den erzeugten Unterdruck eine schlupfende Haltekraft auf die Banderolen 26 aus. Diese ist aufgrund der begrenzten Anzahl der nebeneinanderliegenden Saugbohrungen 89, 90 auf eine vorgegebene Förderstrecke der Banderolen 26 begrenzt (Fig. 6), nämlich bis zur Übernahme derselben durch die Packung 20 bzw. durch die Stirnfläche 23 derselben. An dieser wird die Banderole 26 außerhalb des Bereichs der Saugbohrungen 89, 90 gehalten. Der den mittleren Bereich der Banderole 26 haltende und führende (untere) Führungssteg 88 ist über die Saugbohrungen 90 hinaus mit einer Zunge 95 versehen, welche frei von Saugbohrungen ist und zur Sicherung der Banderole 26 in der Anlageposition an der Stirnfläche 23 dient.

Zwischen den Führungsstegen 87, 88 ist ein Schlitz 96 gebildet. In diesen tritt der obere Mitnehmer 93 der Packungsrohre 31 bei der Förderbewegung ein. Der untere Mitnehmer 94 befindet sich unterhalb des Führungsstegs 88.

Bei dem vorliegenden Ausführungsbeispiel ist die Anordnung so getroffen, daß die Banderole nach Zuführung über den Einführungsschacht 85 für die exakte Positionierung abgesenkt werden muß. Zu diesem Zweck ist an dem oberen Führungssteg 87 eine an den Einführungsschacht 80 in Förderrichtung anschließende Führungskante 97 gebildet. Diese ist in Förderrichtung unter einem spitzen Winkel nach unten geneigt, so daß die Banderole 26 während der Transportbewegung nach unten verschoben wird. Um diese Bewegung zu sichern und um unerwünschte Verschiebungen der Banderole 26 zu vermeiden, ist unterhalb der Führungskante 97 im Führungssteg 87 eine durchgehende Reihe von eng beieinanderliegenden Saugbohrungen 98 vorgesehen. Die Reihe dieser Saugbohrungen 98 folgt der Kontur der Führungskante 97.

Hinsichtlich der Übergabe der Banderolen 26 an die Packungen 20 sind zwei verschiedene Ausführungsbeispiele dargestellt. Gemäß Fig. 4 erstreckt sich die Zunge 95 in Fortsetzung der durch die Führungsstege 87 und 88 gebildeten Anlagefläche für die Banderole 26, etwa in einer Mittelebene des Banderolengebers 84 (Fig. 4). Dadurch hat die Banderole im Bereich der dünnen, blattartigen Zunge 95 noch einen gewissen Abstand von der Einschuböffnung 32 der Packungsrohre 31. Zur Übernahme der Banderole 26 werden demnach die Packungsrohre in Längsrichtung verschoben, nämlich der aufzunehmenden Packung entgegen, und zwar zunächst bis an die Zunge 95 heran und dann noch weiter, wie in Fig. 4 gezeigt. Nach dem Verlassen des Bereichs der Zunge 95 liegt die Einschuböffnung 32 etwa in der Ebene der Zunge, so daß bei fortgesetzter Bewegung die Banderole 26 von der Zunge 95 an die mundstückartige Einschuböffnung 32 übergeben wird. Während dieser Bewegungsphase ist die aufzunehmende Packung 20 soweit an das Mundstück bzw. an die Einschuböffnung 32 heranbewegt, daß die vor dieser Einschuböffnung 32 liegende Banderole 26 durch die Stirnfläche 23 der Packung 20 erfaßt und zwischen dieser sowie der Bodenfläche 35 der davorliegenden Packung 20 fixiert wird. Im weiteren Verlauf wird das Packungsrohr 31 in die Ausgangsstellung zurückbewegt.

Zur Verschiebung der Packungsrohre 31 ist die an der Unterseite derselben angeordnete Führungsschiene 45 in der mit den Zahnriemen 42, 43 verbundenen Tragschiene 44 verschiebbar gelagert. Die Führungsschiene 45 ist an der Unterseite mit einem Mitnehmerzapfen 105 versehen, der in eine ortsfeste Kurvennut 106 der Maschinenplatte 99 eintritt. Die Gestalt der Kurvennut 106 ist so gewählt, daß die Packungsrohre während der Förderbewegung der zugeführten Packung 20 entgegenkommen und danach in die Ausgangsstellung zurückbewegt werden (Fig. 4).

Bei der vor allem in Fig. 5 gezeigten Alternative entfällt eine Längsverschiebung der Packungsrohre 31 zur Übernahme der Banderole 26. Statt dessen ist die Zunge 95 des Banderolengebers 84 so ausgebildet, daß die Banderole 26 während des Transports unter Anlage an der Zunge 95 aufgrund einer versetzten Ausbildung bzw. Anordnung derselben in Richtung auf das zugeordnete Packungsrohr 31 bewegt wird. Die Zunge 95 ist zu diesem Zweck mit einer schrägen Gleitfläche 109 zur Anlage der Banderole 26 ausgebildet.

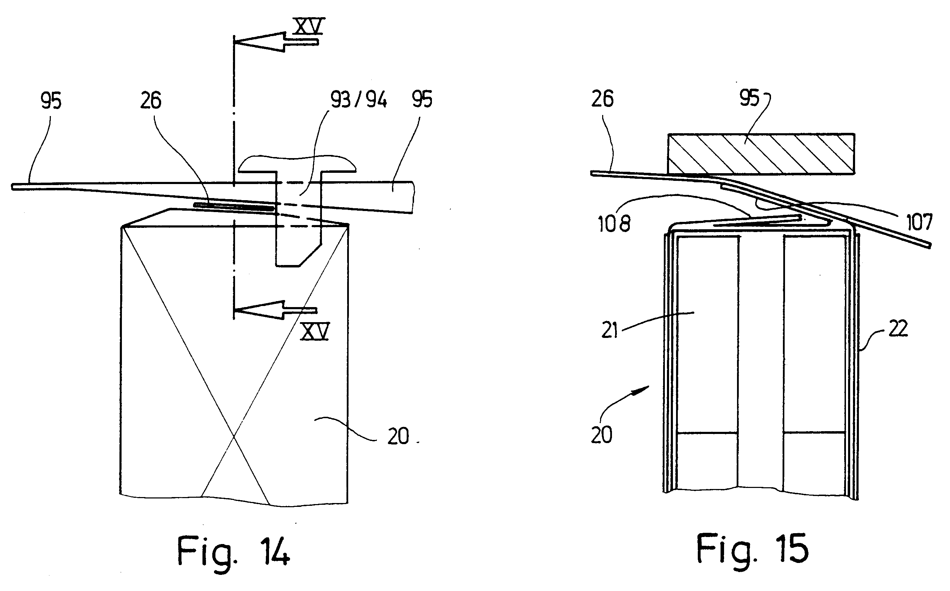

Die Packungen 20 sind während dieser Bewegungsphase so weit an die Zunge 95 heranbewegt, daß die aus nicht miteinander verleimten Faltlappen gebildete Stirnfläche 23 die Banderole 26 auf der freien (beleimten) Seite übernimmt und bei Aufrechterhaltung der Anlage an der Zunge 95 fixiert (Fig. 14 und Fig. 15). Bei dieser Ausführungsform wird das Verhalten von Faltlappen 107, 108 im Bereich der Stirnfläche 23 der Packung 20 genutzt. Die teilweise einander überdeckenden Faltlappen 107, 108 haben aufgrund der Materialeigenschaft Rückstellkräfte, die die Faltlappen 107, 108 in einer Schrägstellung (Fig. 15) halten. Die so von der Stirnfläche 23 abstehenden Faltlappen 107, 108 erfassen die Banderole 26, und zwar insbesondere der außenliegenden Faltlappen 107. Zugleich wird die an dieser Stelle vorhandene Beleimung der Banderole 26 durch Verbindung mit dem Faltlappen 107 wirksam. Durch Fortsetzung der Förderbewegung wird die Packung 20 näher an die Zunge 95 herangeschoben, wobei die Faltlappen 107, 108 in die packungsgerechte Faltstellung gedrückt werden. Zugleich wird die Banderole gegen die Stirnfläche 23 gedrückt. Nach Verlassen des Bereichs der Zunge 95 kommt die Banderole 26 auf der von der Stirnfläche 23 abliegenden Seite unmittelbar zur Anlage an der Einschuböffnung 23 des Packungsrohrs 31, da die Zunge 95 aufgrund ihrer Gestaltung in Richtung zu dieser Einschuböffnung 32 versetzt ist.

Bei dem weiteren Bewegungsablauf wird die Banderole 26 in der beschriebenen Weise gefaltet, wobei die Bodenfläche 35 der davorliegenden Packung 20 als zusätzliches Halteorgan für die Banderole 26 wirksam wird.

Die beschriebenen, parallel zueinander laufenden Förderer für die diesen zugeordneten Organe, nämlich die Zahnriemen 42, 43 sowie 58, 79 sind auf einem gemeinsamen Tragorgan gelagert, nämlich einer durchgehenden Maschinenplatte 99 als Teil eines Maschinengestells 100. In der Maschinenplatte 99 sind im Bereich der Zahnriemen jeweils Vertiefungen 101 gebildet, in denen die Zahnriemen laufen. Auch der Banderolengeber 84 ist über einen Tragarm 102 mit dem Maschinengestell 100 bzw. der Maschinenplatte 99 verbunden. Für die Mitnehmer 93, 94 sind im Bereich des Tragarms 102 Nuten 103, 104 eingelassen.

Die Vorrichtung ist auch für die Verarbeitung solcher Packungen geeignet, bei denen eine Banderole 26 nicht anzubringen ist. Hier fehlen die zur Bereithaltung und Übergabe der Banderole erforderlichen Organe.

## Patentansprüche

1. Vorrichtung zum Anbringen von streifenförmigen Zuschnitten, nämlich Banderolen (26), an einer Stirnfläche (23) einer quaderförmigen Packung (20), wobei die Banderole (26) in einer Ebene quer zur Vorschubrichtung der mit der Stirnfläche (23) in die Vorschubrichtung weisenden Packungen (20) vor einem Mundstück (32) bereitgehalten und beim Durchschieben der Packungen (20) durch das Mundstück (32) U-förmig um die Stirnfläche (23) sowie an angrenzende Packungsflächen (24, 25) gefaltet wird, und wobei das Mundstück (32) eine Eintrittsöffnung eines mindestens eine Packung (20) aufnehmenden Packungsrohres (31) ist, **ge-kennzeichnet durch** folgende Merkmale:
a) die Packungsrohre (31) sind durch einen Rohrförderer (41) und die Packungen (20) durch einen Packungsförderer (53) in aufeinander ausgerichteter Relativstellung quer zur Vorschubrichtung der Packungen (20) fortlaufend bewegbar,
b) die Banderolen (26) sind durch Mitnehmer (93, 94) vor der U-förmigen Umfaltung mit Abstand vor dem Mundstück (32) synchron mit diesem transportierbar,
c) die Banderolen (26) sind durch die korrespondierend zu den Mundstücken (32) bewegten Packungen (20) infolge der Vorschubbewegung derselben bis zur Anlage am Mundstück (32) bewegbar.

2. Vorrichtung nach Anspruch 1, dadurch gekennzeichnet, daß dem Rohrförderer (41) ein Förderer bzw. eine Halterung, insbesondere ein Banderolengeber (84), zum Positionieren der Banderole (26) vor den Mundstücken (32) zugeordnet ist.

3. Vorrichtung nach Anspruch 2, dadurch gekennzeichnet, daß der Banderolengeber (84) ortsfest zwischen Packungsförderer (53) und Rohrförderer (41) angeordnet ist und daß die Banderolen (26) durch die Mitnehmer (93, 94) an dem Banderolengeber (84) entlangförderbar sind.

4. Vorrichtung nach Anspruch 2, dadurch gekennzeichnet, daß die Banderolen (26) an dem Banderolengeber (84) durch Saugluft gehalten und schlupfend infolge Mitnahme durch eine Packung (20) von diesem abziehbar sind.

5. Vorrichtung nach Anspruch 3, dadurch gekennzeichnet, daß die Banderolen (26) quer zur Förderrichtung der Packungen (29) zuförderbar sind, insbesondere von oben über einen Einführungsschacht (85) des Banderolengebers (84) und daß die Banderolen (26) sodann synchron mit den Packungen (20) sowie mittig vor den Mundstücken (32) mitförderbar sind.

6. Vorrichtung nach Anspruch 3, dadurch gekennzeichnet, daß die Banderolen (26) im Bereich des Banderolengebers (84) an Führungsstegen (87, 88) gehalten sind, die mit Reihen von Saugbohrungen (89, 90) zur Fixierung der Banderolen (26) versehen sind.

7. Vorrichtung nach Anspruch 6, dadurch gekennzeichnet, daß die Banderolen (26) im Anschluß an die mit Saugbohrungen (89, 90) versehenen Führungsstege (87, 88) an einer Zunge (95) anliegt und von dieser an die Stirnfläche (23) der Packungen (20) und/oder an die Mundstücke (32) überführbar sind.

8. Vorrichtung nach Anspruch 2 oder 3, dadurch gekennzeichnet, daß die Banderole (26) im Bereich des Banderolengebers (84), insbesondere im Bereich der Zunge (95) derselben, mit Abstand von den Mundstücken (32) transportierbar sind und daß zur Aufnahme der Banderolen (26) die Mundstücke (32) in Längsrichtung zu den Banderolen (26) hin verschiebbar sowie nach Aufnahme der Banderole (26) in die Ausgangsstellung zurückbewegbar sind.

9. Vorrichtung nach Anspruch 2 oder 3, dadurch gekennzeichnet, daß die Banderole im Bereich des Banderolengebers (84) während des Transports in Richtung zum Mundstück (32) verschiebbar ist, insbesondere durch Ausbildung der Zunge (95) mit Versatz, derart, daß die Banderolen (26) beim Verlassen der Zunge (95) unmittelbar vor dem Mundstück (32) liegen und durch die Stirnfläche (23) der Packung (20) erfaßbar sind.

10. Vorrichtung nach Anspruch 3 und 6, dadurch gekennzeichnet, daß die Mitnehmer (93, 94) zum Transport der Banderolen (26) sich oberhalb und unterhalb eines einen mittleren Bereich der Banderole (26) mittels zwei Reihen von Saugbohrungen (90) erfassenden Führungsstegs (88) verlaufen.

11. Vorrichtung nach einem oder mehreren der Ansprüche 1 bis 10, dadurch gekennzeichnet, daß in den Packungsrohren (31) jeweils mehrere Packungen (20) in Längsrichtung aufeinanderfolgend Aufnahme finden, wobei sich jeweils die Stirnfläche (23) einer Packung (20) auf der Bodenfläche (35) einer in Transportrichtung davorliegenden Packung (20) abstützt.

12. Vorrichtung nach Anspruch 11, dadurch gekennzeichnet, daß das Packungsrohr (31) im Querschnitt den Außenkonturen der Packung (20) entspricht, derart, daß diese formgebend bzw. formerhaltend von dem Packungsrohr umgeben ist.

13. Vorrichtung nach Anspruch 8 und 11,dadurch gekennzeichnet, daß die Packungsrohre (31) verschiebbar auf Tragschienen (44) gelagert sind, insbesondere mit an der Unterseite der Packungsrohre (31) angeordneten Führungsschienen (45), die formflüssig mit den Tragschienen (44) verbunden sind.

## Claims

1. Apparatus for attaching strip-like blanks, especially labels (26), to an end face (23) of a cuboidal pack (20), the label (26) being held ready in front of a mouthpiece (32) in a plane transverse to the advancing direction of the packs (20) pointing with the end face (23) in the advancing direction and being folded in a U-shaped manner round the end face (23) and against adjoining pack faces (24, 25) when the packs (20) are pushed through the mouthpiece (32), and the mouthpiece (32) being an inlet opening of a pack channel (31) receiving at least one pack (20), characterized by the following features:
a) the pack channels (31) are continuously moveable by means of a channel conveyor (41) and the packs (20) by means of a pack conveyor (53) in a relative position in alignment with each other transverse to the advancing direction of the packs (20),
b) before they are folded over in a U-shaped manner, the labels (26) are transportable by means of carriers (93, 94) at a distance in front of the mouthpiece (32) and in synchronism with the latter,
c) the labels (26) are moveable by means of the packs (20) moved correspondingly to the mouthpieces (32) as a result of the advancing movement of the latter until abutment on the mouthpiece (32).

2. Apparatus according to Claim 1, characterized in that the channel conveyor (41) is assigned a conveyor or a holding device, especially a label dispenser (84), for positioning the label (26) in front of the mouthpieces (32).

3. Apparatus according to Claim 2, characterized in that the label dispenser (84) is arranged stationary between pack conveyor (53) and channel conveyor (41) and in that the labels (26) are conveyable along the label dispenser (84) by means of the carriers (93, 94).

4. Apparatus according to Claim 2, characterized in that the labels (26) are held on the label dispenser (84) by means of suction air and can be pulled off the latter in a slipping manner as a result of being taken along by a pack (20).

5. Apparatus according to Claim 3, characterized in that the labels (26) are feedable transverse to the conveying direction of the packs (20), especially from above via an introduction shaft (85) of the label dispenser (84), and in that the labels (26) are then conveyable in synchronism with the packs (20) and centrally in front of the mouthpieces (32).

6. Apparatus according to Claim 3, characterized in that the labels (26) are held on guide webs (87, 88) in the region of the label dispenser (84), which guide webs (87, 88) are provided with rows of suction bores (89, 90) for fixing the labels (26) in place.

7. Apparatus according to Claim 6, characterized in that the labels (26), after having contacted the guide webs (87, 88) provided with suction bores (89, 90), come to rest against a tongue (95) and are transferable thereby to the end face (23) of the packs (20) and/or to the mouthpieces (32).

8. Apparatus according to Claim 2 or 3, characterized in that the labels (26) are transportable at a distance from the mouthpieces (32) in the region of the label dispenser (84), especially in the region of the tongue (95) thereof, and in that, for receiving the labels (26), the mouthpieces (32) are shiftable in the longitudinal direction relative to the labels (26) and are movable back to the starting position after having received the label (26).

9. Apparatus according to Claim 2 or 3, characterized in that during transport the label is shiftable in the region of the label dispenser (84) in the direction of the mouthpiece (32), especially by designing the tongue (95) with offset, such that the labels (26) are located directly in front of the mouthpiece (32) when they leave the tongue (95) and can be engaged by the end face (23) of the pack (20).

10. Apparatus according to Claims 3 and 6, characterized in that the carriers (93, 94) for the transport of the labels (26) extend above and below a guide web (88) engaging a central region of the label (26) by means of two rows of suction bores (90).

11. Apparatus according to one or more of Claims 1 to 10, characterized in that the pack channels (31) in each case accommodate a plurality of packs (20) following one another in the longitudinal direction, the end face (23) of one pack (20) in each case being supported on the bottom face (35) of a pack (20) lying in front of it in the transporting direction.

12. Apparatus according to Claim 11, characterized in that the pack channel (31) has a cross-section corresponding to the outer contours of the pack (20), such that the latter is surrounded by the pack channel in a shaping or shape-preserving manner.

13. Apparatus according to Claims 8 and 11, characterized in that the pack channels (31) are shiftably mounted on supporting rails (44), especially with guide rails (45) which are arranged on the bottom side of the pack channels (31) and which are connected to the supporting rails (44) in a form-fitting manner.

## Revendications

1. Dispositif pour placer des pièces découpées, se présentant sous forme de bandes, notamment des banderoles (26), sur une face frontale (23) d'un emballage (20) parallélépipédique, la banderole (26) étant maintenue prête, devant une pièce d'embouchure (32), dans un plan transversal par rapport à la direction de l'avancement des emballages (20) présentant la face frontale dans la direction de l'avancement, et, lors du passage des emballages (20) à travers la pièce d'embouchure (32), étant pliée en U autour de la face frontale (23), ainsi que sur des surfaces d'emballage (24, 25) limitrophes, et la pièce d'embouchure (32) étant une ouverture d'entrée d'un tube d'emballage (31), recevant au moins un emballage (20), caractérisé par les caractéristiques suivantes :
(a) les tubes d'emballage (31) sont déplaçables en continu par un transporteur à tubes (41) et les emballages (20) sont déplaçables en continu, par un transporteur à emballages (53), dans une position relative d'alignement mutuel, en se déplaçant transversalement par rapport à la direction d'avancement des emballages,
b) les banderoles (26) sont transportables, par des organes d'entraînement (93, 94), avant le repli en U, à distance de la pièce d'embouchure (32) et de façon synchrone par rapport à celle-ci,
c) les banderoles (26) sont déplaçables par les emballages (20) déplacés de façon correspondante aux pièces d'embouchure (32), suite au déplacement d'avancement de ces emballages, jusqu'à venue en appui sur la pièce d'embouchure (32).

2. Dispositif selon la revendication 1, caractérisé en ce qu'un transporteur, ou une fixation, en particulier un distributeur à banderoles (84) est associé au transporteur à tubes (41), en vue d'assurer le positionnement de la banderole (26) devant les pièces d'embouchure (32).

3. Dispositif selon la revendication 2, caractérisé en ce que le distributeur à banderoles (84) est disposé fixe entre le transporteur à emballages (53) et le transporteur à tubes (41) et en ce que les banderoles (26) sont transportables le long du distributeur à banderoles (84), par les organes d'entraînement (93, 94).

4. Dispositif selon la revendication 2, caractérisé en ce que les banderoles (26) sont fixées sur le transporteur à banderoles (84) par une dépression d'air et sont susceptibles d'être extraites en glissant du transporteur à banderoles, à la traîne, suite à l'entraînement par un emballage (20).

5. Dispositif selon la revendication 3, caractérisé en ce que les banderoles (26) sont susceptibles d'être amenées transversalement par rapport à la direction de transfert des emballages (29), en particulier depuis le haut, par un puits d'introduction (85) du distributeur à banderoles (84), et en ce que les banderoles (26) sont ensuite entraînables conjointement, en synchronisme avec les emballages (20), ainsi qu'au centre devant les pièces d'embouchure (32).

6. Dispositif selon la revendication 3, caractérisé en ce que les banderoles (26) sont fixées dans la zone du distributeur à banderoles (84), sur des nervures de guidage (87, 88), pourvues de rangées de perçages d'aspiration (89, 90), destinées à la fixation des banderoles (26).

7. Dispositif selon la revendication 6, caractérisé en ce que les banderoles (26), après avoir été placées contre les nervures de guidage (87, 88) pourvues de perçages d'aspiration (89, 90), sont mises en appui sur une languette (95) et, de celle-ci, sont transférables sur la surface frontale (23) des emballages (20) et/ou sur les pièces d'embouchure (32).

8. Dispositif selon la revendication 2 ou 3, caractérisé en ce que, dans la zone du distributeur à banderoles (84), en particulier dans la zone de la languette (95), les banderoles (26) sont transportables à distance des pièces d'embouchure (32), et en ce que, pour recevoir les banderoles (26), les pièces d'embouchure (32) sont déplaçables en direction longitudinale vers les banderoles (26), ainsi que susceptibles d'être rappelées en position initiale, après réception des banderoles (26).

9. Dispositif selon la revendication 2 ou 3, caractérisé en ce que, dans la zone du distributeur à banderoles (84), la banderole est déplaçable, pendant le transport, en direction de la pièce d'embouchure (32), en particulier par configuration de la languette (95), avec un décrochement, de manière que les banderoles (26) puissent être saisies lorsqu'elles quittent la languette (95), directement devant la pièce d'embouchure (32), et par la face frontale (23) de l'emballage (20).

10. Dispositif selon les revendications 3 et 6, caractérisé en ce que les organes d'entraînement (93, 94) destinés au transport des banderoles (26) s'étendent au-dessus et au-dessous d'une nervure de guidage (88) saisissant une zone médiane de la banderole (26), au moyen de deux séries de perçages d'aspiration (90).

11. Dispositif selon l'une ou plusieurs des revendications 1 à 10, caractérisé en ce que plusieurs emballages (20) se trouvent chacun dans les tubes d'emballage (31), logés les uns à la suite des autres dans la direction longitudinale, la face frontale (23) de chaque emballage (20) prenant appui sur la face de fond (35) d'un emballage (20) situé devant dans la direction du transport.

12. Dispositif selon la revendication 11, caractérisé en ce que la section transversale du tube d'emballage (31) correspond aux contours extérieurs de l'emballage (20), de manière que celui-ci soit entouré par le tube d'emballage, en lui donnant sa forme, ou en en recevant sa forme.

13. Dispositif selon les revendications 8 et 11, caractérisé en ce que les tubes d'emballage (31) sont montés déplaçables sur des glissières supports (44), en particulier avec des glissières support (45) disposées en face inférieure des tubes d'emballage (31) et reliés avec ajustement de forme aux glissières supports (44).
